# EUROPÄISCHE PATENTSCHRIFT

(11) **EP 0 515 871 B1**
(45) Veröffentlichungstag und Bekanntmachung des Hinweises auf die Patenterteilung: **02.08.1995**
(21) Anmeldenummer: 92107545.3
(22) Anmeldetag: 05.05.1992
(51) Int. Cl.: C08F 285/00

(54) **Mehrstufiges Pfropfcopolymerisat und seine Verwendung zur Herstellung von PVC-Formmassen**
Multiple stage graft copolymer and its use in the preparation of PVC mouldings
Polymère greffé à plusieurs étapes et son utilisation dans la préparation de masses à mouler de PVC

(30) Priorität: 28.05.1991 DE 4117372
(43) Veröffentlichungstag der Anmeldung: 02.12.1992
(73) Patentinhaber: BASF Aktiengesellschaft, 67063 Ludwigshafen (DE)
(72) Erfinder: Nolte, Rainer, Dr., W-6700 Ludwigshafen (DE); Oschmann, Werner, Dr., W-6700 Ludwigshafen (DE)

(56) Entgegenhaltungen:
- EP-A- 0 278 788
- EP-A- 0 374 814

## Beschreibung

Die Erfindung betrifft Pfropfcopolymerisate, erhältlich durch
A) Emulsionspolymerisation von 2 bis 20 Gew.-% eines Monomerengemisches aus
   a₁) 40 bis 100 Gew.-% mindestens eines konjugierten Diens
   a₂) 0 bis 60 Gew.-% mindestens eines vinylaromatischen Monomeren
   a₃) 0 bis 10 Gew.-% mindestens eines zwei- oder mehrfach ethylenisch ungesättigten Monomeren mit mindestens einer nicht konjugierten Doppelbindung
   a₄) 0 bis 5 Gew.-% mindestens eines weiteren Monomeren,
B) anschließende Emulsionspolymerisation in Gegenwart des nach Stufe A) erhaltenen Emulsionspolymerisates von 4 bis 15 Gew.-% eines Monomerengemisches aus
   b₁) 40 bis 80 Gew.-% mindestens eines vinylaromatischen Monomeren
   b₂) 20 bis 60 Gew.-% mindestens eines C₁-C₁₈-Alkylmethacrylates
   b₃) 0 bis 25 Gew.-% mindestens eines C₁-C₁₈-Alkylacrylates
   b₄) 0 bis 10 Gew.-% mindestens eines zwei- oder mehrfach ethylenisch ungesättigten Monomeren mit mindestens einer nicht konjugierten Doppelbindung
   b₅) 0 bis 5 Gew.-% mindestens eines weiteren Monomeren,
C) anschließende Emulsionspolymerisation in Gegenwart des nach Stufe B) erhaltenen Emulsionspolymerisates von 5 bis 45 Gew.-% eines Monomerengemisches aus
   c₁) 60 bis 100 Gew.-% mindestens eines konjugierten Diens
   c₂) 0 bis 40 Gew.-% mindestens eines vinylaromatischen Monomeren
   c₃) 0 bis 10 Gew.-% mindestens eines zwei- oder mehrfach ethylenisch ungesättigten Monomeren mit mindestens einer nicht konjugierten Doppelbindung
   c₄) 0 bis 15 Gew.-% mindestens eines C₁-C₁₈-Alkylacrylates
   c₅) 0 bis 5 Gew.-% mindestens eines weiteren Monomeren,
D) anschließende Emulsionspolymerisation in Gegenwart des nach Stufe C) erhaltenen Emulsionspolymerisates von 20 bis 35 Gew.-% eines Monomerengemisches aus
   d₁) 35 bis 80 Gew.-% mindestens eines vinylaromatischen Monomeren
   d₂) 20 bis 65 Gew.-% mindestens eines C₁-C₁₈-Alkylmethacrylates
   d₃) 0 bis 15 Gew.-% mindestens eines C₁-C₁₈-Alkylacrylates
   d₄) 0 bis 10 Gew.-% mindestens eines zwei- oder mehrfach ethylenisch ungesättigten Monomeren mit mindestens einer nicht konjugierten Doppelbindung
   d₅) 0 bis 5 Gew.-% mindestens eines weiteren Monomeren
und
E) anschließende Emulsionspolymerisation in Gegenwart des nach Stufe D) erhaltenen Emulsionspolymerisates von 0 bis 7 Gew.-% eines Monomerengemisches aus
   e₁) 90 bis 100 Gew.-% mindestens eines C₁-C₁₈-Alkylmethacrylates
   e₂) 0 bis 10 Gew.-% mindestens eines C₁-C₁₈-Alkylacrylates und
   e₃) 0 bis 5 Gew.-% mindestens eines zwei- oder mehrfach ethylenisch ungesättigten Monomeren mit mindestens einer nicht konjugierten Doppelbindung
wobei sich die Gewichtsprozente der in den Stufen A) bis E) eingesetzten Monomerengemische auf das Pfropfcopolymerisat beziehen und sich auf 100 Gew.-% addieren.

Weiterhin betrifft die Erfindung ein Verfahren zur Herstellung dieser Copolymerisate sowie thermoplastische Formmassen, die diese Copolymerisate enthalten.

Die Schlagzähigkeit von schlagzäh modifizierten PVC-Formmassen erhöht sich im allgemeinen, wenn man die Teilchengröße der kautschukartigen Copolymerisate der zugesetzten Modifizierungsmittel erhöht. Dadurch vermindert sich aber in der Regel die Transparenz der so modifizierten PVC-Formmassen.

Um diesen Mangel zu beseitigen, hat man zahlreiche Modifizierungsmittel entwickelt. Speziell aus der EP-A 278 788 sind dreistufige Pfropfcopolymerisate mit einem Weich-Hart-Hart-Aufbau bekannt, wobei die erste Stufe im wesentlichen aus Butadien, die zweite Stufe hauptsächlich aus Methylmethacrylat und die dritte Stufe überwiegend aus Styrol als Monomereinheiten aufgebaut sind.

In der EP-B 163 939 wird ein Pfropfcopolymerisat mit einem Styrol-Butadien-Kautschuk-Kern beschrieben. Der Kern ist von zwei Hüllen umgeben, wobei die innere Hülle im wesentlichen aus Methylmethacrylat und die Außenhülle hauptsächlich aus Styrol aufgebaut sind.

Die Transparenz der so schlagzäh modifizierten Polyvinylchloridformmassen ist jedoch unbefriedigend.

Aufgabe der vorliegenden Erfindung war daher die Bereitstellung von Pfropfcopolymerisaten, welche die Transparenz von hochschlagfesten Polyvinylchloridformmassen bei gleichbleibender Schlagzähigkeit verbessern.

Demgemäß wurden die eingangs definierten Pfropfcopolymerisate gefunden.

Die erfindungsgemäßen Pfropfcopolymersiate sind erhältlich durch Emulsionspolymerisation in mehreren Stufen.

In der Stufe A) wird bevorzugt ein Monomerengemisch aus
a₁) 45 bis 95 Gew.-% mindestens eines konjugierten Diens
a₂) 5 bis 55 Gew.-% mindestens eines vinylaromatischen Monomeren
a₃) 0,5 bis 6 Gew.-% mindestens eines zwei- oder mehrfach ethylenisch ungesättigten Monomeren mit mindestens einer nicht konjugierten Doppelbindung
a₄) 0 bis 5 Gew.-% mindestens eines weiteren Monomeren
eingesetzt.

Der Gewichtsanteil des Monomerengemischs in der Stufe A) am gesamten Pfropfcopolymerisat beträgt bevorzugt 5 bis 20 Gew.-%.

In der Stufe B) wird bevorzugt ein Monomerengemisch aus
b₁) 45 bis 75 Gew.-% mindestens eines vinylaromatischen Monomeren
b₂) 25 bis 55 Gew.-% mindestens eines C₁-C₁₈-Alkylmethacrylates
b₃) 0 bis 20 Gew.-% mindestens eines C₁-C₁₈-Alkylacrylates
b₄) 0 bis 10 Gew.-% mindestens eines zwei- oder mehrfach ethylenisch ungesättigten Monomeren mit mindestens einer nicht konjugierten Doppelbindung
b₅) 0 bis 5 Gew.-% mindestens eines weiteren Monomeren
eingesetzt.

Der Gewichtsteil des Monomerengemisches in der Stufe B) am gesamten Pfropfcopolymerisat beträgt bevorzugt 5 bis 15 Gew.-%. In der Stufe C) wird bevorzugt ein Monomerengemisch aus
c₁) 65 bis 95 Gew.-% mindestens eines konjugierten Diens
c₂) 5 bis 35 Gew.-% mindestens eines vinylaromatischen Monomeren
c₃) 0 bis 10 Gew.-% mindestens eines zwei- oder mehrfach ethylenisch ungesättigten Monomeren mit mindestens einer nicht konjugierten Doppelbindung
c₄) 0 bis 15 Gew.-% mindestens eines C₁-C₁₈-Alkylacrylates
c₅) 0 bis 5 Gew.-% mindestens eines weiteren Monomeren
eingesetzt.

Der Gewichtsanteil des Monomerengemischs in der Stufe C) am gesamten Pfropfcopolymerisat beträgt bevorzugt 35 bis 60 Gew.-%.

In der Stufe D) wird bevorzugt ein Monomerengemisch aus
d₁) 40 bis 75 Gew.-% mindestens eines vinylaromatischen Monomeren
d₂) 25 bis 60 Gew.-% mindestens eines C₁-C₁₈-Alkylmethacrylates
d₃) 0 bis 15 Gew.-% mindestens eines C₁-C₁₈-Alkylacrylates
d₄) 0 bis 10 Gew.-% mindestens eines zwei- oder mehrfach ethylenisch ungesättigten Monomeren mit mindestens einer nicht konjugierten Doppelbindung
d₅) 0 bis 5 Gew.-% mindestens eines weiteren Monomeren
eingesetzt.

Der Gewichtsanteil des Monomerengemisches in der Stufe D) am gesamten Pfropfcopolymerisat beträgt bevorzugt 20 bis 35 Gew.-%.

Durch eine zusätzlich äußere Stufe E) aus überwiegend C₁-C₄-Alkylmethacrylaten wie Methyl-, Ethyl-, Propyl-, n-Butyl- und tert.-Butylmethacrylat, welche bevorzugt zu 95 bis 100 Gew.-% aus Methyl- oder Ethylmethacrylat, besonders bevorzugt zu 100 Gew.-% aus Methylmethacrylat besteht, kann man die Verträglichkeit des Pfropfcopolymerisats mit Polyvinylchlorid verbessern.

Als konjugierte Diene seien beispielsweise Butadien, Isopren und Chloropren genannt, wobei Butadien besonders bevorzugt ist.

Als vinylaromatische Monomere kann man Styrol sowie dessen ein- oder mehrfach kernsubstituierte Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol, einsetzen. Dabei verwendet man besonders bevorzugt Styrol.

Als zwei- oder mehrfach ethylenisch ungesättigte Monomere seien beispielhaft aufgeführt Allyl-, Methallyl- und Vinylester von Di-, Tri- oder höheren Carbonsäuren wie Adipinsäuredivinylester, Phtalsäurediallylester, Maleinsäurediallylester, Fumarsäurediallylester; Allyl-, Methallyl- und Vinylether mehrfunktioneller Alkohole wie Ethylenglykoldivinylether, 1,3-Butandioldivinylether, 1,4-Butandioldivinylether, Pentaerythrittriallylether; Ester der Acryl- oder Methacrylsäure mit mehrwertigen Alkoholen wie Ethylenglykoldi (meth)acrylat, 1,2-Propandioldi(meth)acrylat, 1,3-Propandioldi(meth)acrylat, 1,3-Butandioldi(meth)acrylat, 1,4-Butandioldi(meth)acrylat, Oligo- oder Polyethylenglykoldi(meth)acrylat; Divinylbenzol oder Mischungen der genannten Substanzen. Bevorzugt sind zweifach ungesättigte Monomere, insbesondere Divinylbenzol sowie 1,3-Butandioldi(meth)acrylat und 1,4-Butandioldi(meth)acrylat.

Als C₁-C₁₈-Alkylmethacrylate kommen bevorzugt die C₁-C₄-Alkylmethacrylate wie Methylmethacrylat, Ethylmethacrylat, Propylmethacrylat, n-Butylmethacrylat, tert.Butylmethacrylat, insbesondere Methylmethacrylat, in Betracht.

Unter den C₁-C₁₈-Alkylacrylaten sind die C₁-C₁₂-Alkylacrylate, insbesondere die C₁-C₄-Alkylacrylate wie Methylacrylat, Ethylacrylat, Propylacrylat, n-Butylacrylat, tert.Butylacrylat sowie 2-Ethylhexylacrylat und Laurylacrylat bevorzugt.

Als weitere Monomere kann man z.B. Vinylether wie Vinylisobutylether sowie Vinylester wie Vinylacetat oder Vinylpropionat einsetzen. In der Stufe A) kann man als weitere Monomere auch die obengenannten Alkyl(meth)acrylate, in der Stufe C) auch die obengenannten Alkylmethacrylate verwenden. Der Einsatz weiterer Monomere ist in der Regel für eine Verbesserung der Schlagzähigkeit und Transparenz nicht notwendig, er kann jedoch in einigen Fällen von Vorteil sein.

Die erfindungsgemäßen Pfropfcopolymerisate stellt man im allgemeinen durch Emulsionspolymerisation her.

Als Emulgatoren kann man beispielsweise Natrium-, Kalium- oder Ammoniumsalze von gesättigten oder ungesättigten C₈-C₂₀-Fettsäuren wie Laurinsäure, Palmitinsäure, Stearinsäure, Ölsäure, C₈-C₂₀-Alkylsulfonsäuren, insbesondere Octylsulfonsäure, Dodecylsulfonsäure, Hexadecylsulfonsäure und Eicosylsulfonsäure, Schwefelsäure-C₈-C₂₀-alkylestern, insbesondere Schwefelsäureoctylester, Schwefelsäuredecylester, Schwefelsäureoctadecylester, C₁-C₆-Alkylbenzolsulfonsäuren, insbesondere Methylbenzolsulfonsäure, Ethylbenzolsulfonsäure, Butylbenzolsulfonsäure, Abietinsäure und deren Derivate, Sulfobernsteinsäure-C₁-C₈-alkylestern, insbesondere Sulfobernsteinsäure-bis-(2-ethylhexylester), Sulfobernsteinsäuredioctylester, C₁-C₈-alkylierten Diphenylethersulfonsäuren, insbesondere das Na-Salz der dodecylierten Diphenylether-disulfonsäure.

Durch die Wahl von Art und Menge des Emulgators kann man in an sich bekannter Weise die Teilchengröße der Emulsion einstellen. Man wählt den Bereich in der Regel zwischen 50 und 300 nm, bevorzugt zwischen 70 und 200 nm, besonders bevorzugt zwischen 70 und 150 nm. Durch die Teilchengröße werden sowohl die optischen Eigenschaften (Transparenz, Opaleszenz) als auch die mechanischen Eigenschaften (Schlagzähigkeit) beeinflußt.

Als Initiatoren setzt man im allgemeinen wasserlösliche thermisch zerfallende Initiatoren oder Redoxsysteme ein. Geeignete thermisch zerfallende Initiatoren sind beispielsweise Natrium-, Kalium- oder Ammoniumpersulfat sowie wasserlösliche Azoverbindungen wie das Natriumsalz der 4,4' -Azo-bis-(4,4'-cyanopentansäure). Als Redoxsysteme kann man beispielsweise Cumolhydroperoxid, Diisopropylbenzolhydroperoxid, tert.-Butylperacetat, tert.-Butylhydroperoxid in Kombination mit Reduktionsmitteln wie Natriumformaldehydsulfoxylat oder Ascorbinsäure in Gegegenwart von Eisensalzen verwenden. Auch die genannten Persulfate kann man in Kombination mit Reduktionsmitteln wie Natrium- oder Kaliummetabisulfit in Redoxsystemen einsetzen.

Die Polymerisationstemperatur wählt man in der Regel zwischen 10 und 100°C, bevorzugt zwischen 50 und 90°C.

Zunächst polymerisiert man die Monomeren der Stufe A). Danach gibt man die Monomeren der weiteren Stufen B)-E) sukzessive zur wäßrigen Emulsion. Die Monomeren in den einzelnen Stufen polymerisiert man in der Regel zu mehr als 70 Gew.-%, bevorzugt zu mehr als 95 Gew.-%, besonders bevorzugt zu mehr als 99 Gew.-%, aus, bevor man mit der Zugabe der Monomeren einer weiteren Stufe beginnt.

Der Feststoffgehalt der Emulsionen beträgt im allgemeinen 30 bis 60 Gew.-%.

Das Pfropfcopolymerisat kann man aus der Emulsion bzw. der Dispersion in an sich bekannter Weise beispielsweise durch Fällung oder Sprühtrocknung isolieren und mit einem Thermoplasten und, falls gewünscht, weiteren Zusatzstoffen wie Stabilisatoren, Gleitmitteln, Füllstoffen, Farbstoffen, Pigmenten oder weiteren Modifizierungsmitteln zur Verbesserung der Transparenz, Witterungsbeständigkeit, Schlagzähigkeit nach bekannten Verfahren in Extrudern, Knetern oder Walzen mischen. Es ist auch möglich, die Dispersion mit einer PVC-Suspension nach an sich bekannter Weise zu mischen und in üblicher Weise aufzuarbeiten.

Die thermoplastischen Formmassen enthalten in der Regel 2 bis 40 Gew.-%, bevorzugt 5 bis 30 Gew.-% der erfindungsgemäßen Pfropfcopolymerisate.

Die Pfropfcopolymerisate eignen sich im allgemeinen insbesondere als Modifizierungsmittel für Formmassen auf Basis von Polyvinylhalogeniden.

Bevorzugt sind daher thermoplastische Formmassen, enthaltend
60 bis 98 Gew.-%, vorzugsweise 70 bis 95 Gew.-% eines Polyvinylhalogenids
und
2 bis 40 Gew.-%, vorzugsweise 5 bis 30 Gew.-% des Pfropfcopolymerisats.

Geeignete Polyvinylhalogenide sind in der Regel vor allem Homo- und Copolymere des Vinylchlorids mit mindestens 80 Gew.-% Vinylchlorid-Einheiten oder nachchloriertes Polyvinylchlorid.

Besonders bevorzugt ist das Homopolymer des Vinylchlorids.

Die Verarbeitung der Formmassen erfolgt durch für Thermoplaste übliche Methoden (z.B. Extrudieren, Spritzgießen, Kalandrieren, Pressen, Tiefziehen), so daß sich nähere Ausführungen hierzu erübrigen.

Die erfindungsgemäßen Pfropfcopolymerisate eignen sich besonders zur Herstellung hochschlagfester und hochtransparenter Polyvinylchloridformmassen.

### Beispiele

### Herstellung der Pfropfcopolymerisate

### Beispiel 1a

In einem mit Rührer, Temperierung und Dosiervorrichtungen ausgestatteten Reaktionsgefäß wurde eine Mischung aus 280 ml Wasser, 2,9 g dodecyliertes Dinatriumdiphenylether-disulfonat, 24 mg EDTA, 5 mg FeSO₄*7H₂O sowie 0,6 g Natrium-hydroxymethansulfinat unter Rühren auf 80°C erwärmt. (Alle folgenden Schritte wurden bei dieser Temperatur ausgeführt.)

### Stufe A:

Zu der obigen Reaktionsmischung wurde eine Mischung aus 204 g Butadien, 33,6 g Styrol und 2,4 g Butandioldiacrylat in 4 h zudosiert und 2 h nachreagiert. Parallel dazu wurden 1,2 g tert.-Butylhydroperoxid in 80 ml Wasser während der gesamten 6 h Reaktionszeit zugegeben.

### Stufe B:

Zu 300 g der in Stufe A erhaltenen Dispersion wurden 120 ml, 1,7 g dodecyliertes Dinatriumdiphenylether-disulfonat, 14 mg EDTA, 3 mg FeSO₄*7H₂O sowie 0,4 g Natrium-hydroxymethansulfinat gegeben. Danach wurde innerhalb von 3 h eine Mischung aus 101 g Styrol, 42 g Methylmethacrylat und 1,4 g Butandioldiacrylat zudosiert und 1 h nachpolymerisiert. Parallel dazu wurden 1,0 g tert.-Butylhydroperoxid in 40 ml Wasser zugegeben.

### Stufe C:

Zu 170 g der in Stufe B erhaltenen Dispersion wurden 180 ml Wasser, 2, 1 g dodecyliertes Dinatriumdiphenylether-disulfonat, 17 mg EDTA, 3 mg FeSO₄*7H₂O sowie 0,43 g Natrium-hydroxymethansulfinat gegeben. Nun wurden 10 Gew.-% der folgenden Mischung zudosiert: 111 g Butadien, 58,3 g Styrol und 1,7 g Butandioldiacrylat. Die restlichen 90 Gew.-% dieser Mischung wurden anschließend während 4 h zudosiert, und dann wurde 2 h nachpolymerisiert. Parallel dazu wurden 0,85 g tert.-Butylhydroperoxid in 80 ml Wasser zugegeben.

### Stufe D:

Zu 480 g der in Stufe C erhaltenen Dispersion wurden 20 ml Wasser, 1,0 g dodecyliertes Dinatriumdiphenylether-disulfonat, 8 mg EDTA, 2 mg FeSO₄*7H₂O sowie 0,20 g Natrium-hydroxymethansulfinat gegeben. Danach wurde ein Gemisch aus 32,4 g Styrol, 32,4 g Methylmethacrylat und 0,8 g Butandioldiacrylat innerhalb von 2 h zudosiert. Anschließend wurden weitere 15,4 g Methylmethacrylat während 30 min zugegegeben und hiernach wurde 1 h nachpolymerisiert. Parallel dazu wurden innerhalb von 3 h 0,41 g tert.Butylhydroperoxid in 20 ml Wasser zudosiert. Zu der so erhaltenen Dispersion wurden noch 0,5 g dodecyliertes Dinatriumdiphenylether-disulfonat zugesetzt. Die Dispersion hatte einen Feststoffgehalt von 45,0 Gew.-% und einen pH-Wert von 3,7.

Beispiele 1b - f und Vergleichsbeispiel A (gemäß Bsp. 1 aus EP-A 278 788).

Die Dispersionen wurden analog zu Beispiel 1a hergestellt (Zusammensetzung lt. Tab. 1).

Die Dispersionen wurden jeweils mit 40 g eines handelsüblichen Stabilisators (Octadecyl-β-(4'-hydroxy-3',5'-di-tert.-butylphenyl)propionat) in dispergierter Form versetzt und in üblicher Art und Weise sprühgetrocknet.

### Herstellung der thermoplastischen Formmassen

90 g Suspensions-PVC, K-Wert 57
10 g Pfropfcopolymerisat
1 g Stabilisator (Di-n-octylzinn-bis-thioglykolsäureisooctylester)
wurden bei 165°C 8 min lang in einem Walzwerk gemischt. Die so erhaltenen Mischungen wurden bei 170°C unter folgenden Bedingungen zu Platten gepreßt:
10 min vorheizen bei 1 bar
3 min pressen bei 50 bar
2 min pressen bei 200 bar
5 min kühlen bei 200 bar.

### Mechanische und optische Eigenschaften

Durchlicht und Streulicht wurden an 4 mm dicken Preßplatten mit Hilfe der Ulbricht-Kugel ermittelt (Tabelle 2).

Die Schlagzähigkeit wurde nach DIN 53 753 (Kerbschlagzähigkeit) und nach ISO 180/1A (Schlagbiegeprüfung) bestimmt (Tabelle 3).

**Tabelle 1**

| Zusammensetzung der Pfropfcopolymerisate | | | | | | |
|---|---|---|---|---|---|---|
| Beispiel | Anteil am Gesamtpolymer [%] | Stufe | Zusammensetzung [%] | | | Vernetzer |
| | | | Styrol | Butadien | MMA | |
| 1a | 8 | A | 14 | 85 | -- | 1 |
| | 12 | B | 70 | -- | 29 | 1 |
| | 50 | C | 34 | 65 | -- | 1 |
| | 30 | D | 40 | -- | 59 | 1 |
| 1b | 8 | A | 14 | 85 | -- | 1 |
| | 8 | B | 52 | -- | 46 | 2 |
| | 54 | C | 29 | 70 | -- | 1 |
| | 30 | D | 39 | -- | 59 | 2 |
| 1c | 8 | A | 14 | 85 | -- | 1 |
| | 8 | B | 52 | -- | 46 | 2 |
| | 54 | C | 25 | 74 | -- | 1 |
| | 30 | D | 39 | -- | 59 | 2 |
| 1d | 10 | A | 19 | 80 | -- | 1 |
| | 6 | B | 52 | -- | 46 | 2 |
| | 54 | C | 25 | 74 | -- | 1 |
| | 30 | D | 39 | -- | 59 | 2 |
| 1e | 10 | A | 24 | 75 | -- | 1 |
| | 6 | B | 52 | -- | 46 | 2 |
| | 54 | C | 24 | 75 | -- | 1 |
| | 30 | D | 39 | -- | 59 | 2 |
| 1f | 6 | A | 14 | 85 | -- | 1 |
| | 10 | B | 70 | -- | 29 | 1 |
| | 54 | C | 29 | 70 | -- | 1 |
| | 25 | D | 52 | -- | 46 | 1 |
| | 5 | E | -- | -- | 100 | - |
| A (Vergleich) | 70 | A | 25 | 74 | -- | 1 |
| | 15 | B | -- | -- | 80/20* | - |
| | 15 | C | 99 | -- | -- | 1 |

| | | | | | | |
|---|---|---|---|---|---|---|
| * 20 Gew.-% Ethylacrylat | | | | | | |

**Tabelle 2**

| Beispiel | Vicat A DIN 53 460 [°C] | Transparenz | |
|---|---|---|---|
| | | Durchl. | Streulicht |
| 1a | 91,5 | 92,1 | 5,0 |
| 1b | 98,4 | 90,4 | 6,2 |
| 1c | 96,1 | 87,2 | 9,8 |
| 1d | 109,1 | 86,8 | 10,3 |
| 1e | 83,8 | 86,3 | 11,4 |
| 1f | 76,9 | 84,8 | 8,7 |
| A (Vergleich) | 37,7 | 84,2 | 11,2 |

**Tabelle 3**

| Beispiel | Kerbschlagzähigkeit [kJ/mm²] (Doppel-V-Kerbe, r=0.5 mm) | Schlagbiegeprüfung [kJ/mm²] |
|---|---|---|
| 1a | 57,6 | 18,4 |
| 1b | 58,4 | 14,7 |
| 1c | 57,7 | 20,2 |
| 1d | 70,3 | 18,1 |
| 1e | 55,0 | 15,2 |
| 1f | 56,1 | 18,2 |
| A (Vergleich) | 37,7 | 12,0 |

## Patentansprüche (Patentansprüche für folgende(n) Vertragsstaat(en): BE, CH, DE, FR, GB, IT, LI, NL)

1. Pfropfcopolymerisate, erhältlich durch
A) Emulsionspolymerisation von 2 bis 20 Gew.-% eines Monomerengemisches aus
a₁) 40 bis 100 Gew.-% mindestens eines konjugierten Diens
a₂) 0 bis 60 Gew.-% mindestens eines vinylaromatischen Monomeren
a₃) 0 bis 10 Gew.-% mindestens eines zwei- oder mehrfach ethylenisch ungesättigten Monomeren mit mindestens einer nicht konjugierten Doppelbindung
a₄) 0 bis 5 Gew.-% mindestens eines weiteren Monomeren,
B) anschließende Emulsionspolymerisation in Gegenwart des nach Stufe A) erhaltenen Emulsionspolymerisates von 4 bis 15 Gew.-% eines Monomerengemisches aus
b₁) 40 bis 80 Gew.-% mindestens eines vinylaromatischen Monomeren
b₂) 20 bis 60 Gew.-% eines C₁-C₁₈-Alkylmethacrylates
b₃) 0 bis 25 Gew.-% mindestens eines C₁-C₁₈-Alkylacrylates
b₄) 0 bis 10 Gew.-% mindestens eines zwei- oder mehrfach ethylenisch ungesättigten Monomeren mit mindestens einer nicht konjugierten Doppelbindung
b₅) 0 bis 5 Gew.-% mindestens eines weiteren Monomeren,
C) anschließende Emulsionspolymerisation in Gegenwart des nach Stufe B) erhaltenen Emulsionspolymerisates von 5 bis 45 Gew.-% eines Monomerengemisches aus
c₁) 60 bis 100 Gew.-% mindestens eines konjugierten Diens
c₂) 0 bis 40 Gew.-% mindestens eines vinylaromatischen Monomeren
c₃) 0 bis 10 Gew.-% mindestens eines zwei- oder mehrfach ethylenisch ungesättigten Monomeren mit mindestens einer nicht konjugierten Doppelbindung
c₄) 0 bis 15 Gew.-% mindestens eines C₁-C₁₈-Alkylacrylates
c₅) 0 bis 5 Gew.-% mindestens eines weiteren Monomeren,
D) anschließende Emulsionspolymerisation in Gegenwart des nach Stufe C) erhaltenen Emulsionspolymerisates von 20 bis 35 Gew.-% eines Monomerengemisches aus
d₁) 35 bis 80 Gew.-% mindestens eines vinylaromatischen Monomeren
d₂) 20 bis 65 Gew.-% mindestens eines C₁-C₁₈-Alkylmethacrylates
d₃) 0 bis 15 Gew.-% mindestens eines C₁-C₁₈-Alkylacrylates
d₄) 0 bis 10 Gew.-% mindestens eines zwei- oder mehrfach ethylenisch ungesättigten Monomeren mit mindestens einer nicht konjugierten Doppelbindung
d₅) 0 bis 5 Gew.-% mindestens eines weiteren Monomeren
und
E) anschließende Emulsionspolymerisation in Gegenwart des nach Stufe D) erhaltenen Emulsionspolymerisates von 0 bis 7 Gew.-% eines Monomerengemisches aus
e₁) 90 bis 100 Gew.-% mindestens eines C₁-C₁₈-Alkylmethacrylates
e₂) 0 bis 10 Gew.-% mindestens eines C₁-C₁₈-Alkylacrylates und
e₃) 0 bis 5 Gew.-% mindestens eines zwei- oder mehrfach ethylenisch ungesättigten Monomeren mit mindestens einer nicht konjugierten Doppelbindung
wobei sich die Gewichtsprozente der in den Stufen A) bis E) eingesetzten Monomerengemische auf das Pfropfcopolymerisat beziehen und sich auf 100 Gew.-% addieren.

2. Verfahren zur Herstellung von Propfcopolymerisaten gemäß Anspruch 1, dadurch gekennzeichnet, daß man es gemäß den dort genannten Maßnahmen durchführt.

3. Thermoplastische Formmassen, enthaltend 2 bis 40 Gew.-% eines Pfropfcopolymerisats gemäß Anspruch 1.

4. Thermoplastische Formmassen, enthaltend
60 bis 98 Gew.-% Polyvinylhalogenid oder eines Vinylchloridcopolymeren mit mindestens 80 Gew.-% Vinylchlorideinheiten oder chloriertes Polyvinylchlorid und
2 bis 40 Gew.-% eines Pfropfcopolymerisats gemäß Anspruch 1.

5. Formteile, hergestellt aus thermoplastischen Formmassen gemäß Anspruch 3 oder 4.

## Patentansprüche (Patentansprüche für folgende(n) Vertragsstaat(en): ES)

1. Verfahren zur Herstellung von Pfropfcopolymerisaten, dadurch gekennzeichnet, daß man die nachfolgenden Schritte ausführt:
A) Emulsionspolymerisation von 2 bis 20 Gew.-% eines Monomerengemisches aus
a₁) 40 bis 100 Gew.-% mindestens eines konjugierten Diens
a₂) 0 bis 60 Gew.-% mindestens eines vinylaromatischen Monomeren
a₃) 0 bis 10 Gew.-% mindestens eines zwei- oder mehrfach ethylenisch ungesättigten Monomeren mit mindestens einer nicht konjugierten Doppelbindung
a₄) 0 bis 5 Gew.-% mindestens eines weiteren Monomeren,
B) anschließende Emulsionspolymerisation in Gegenwart des nach Stufe A) erhaltenen Emulsionspolymerisates von 4 bis 15 Gew.-% eines Monomerengemisches aus
b₁) 40 bis 80 Gew.-% mindestens eines vinylaromatischen Monomeren
b₂) 20 bis 60 Gew.-% eines C₁-C₁₈-Alkylmethacrylates
b₃) 0 bis 25 Gew.-% mindestens eines C₁-C₁₈-Alkylacrylates
b₄) 0 bis 10 Gew.-% mindestens eines zwei- oder mehrfach ethylenisch ungesättigten Monomeren mit mindestens einer nicht konjugierten Doppelbindung
b₅) 0 bis 5 Gew.-% mindestens eines weiteren Monomeren,
C) anschließende Emulsionspolymerisation in Gegenwart des nach Stufe B) erhaltenen Emulsionspolymerisates von 5 bis 45 Gew.-% eines Monomerengemisches aus
c₁) 60 bis 100 Gew.-% mindestens eines konjugierten Diens
c₂) 0 bis 40 Gew.-% mindestens eines vinylaromatischen Monomeren
c₃) 0 bis 10 Gew.-% mindestens eines zwei- oder mehrfach ethylenisch ungesättigten Monomeren mit mindestens einer nicht konjugierten Doppelbindung
c₄) 0 bis 15 Gew.-% mindestens eines C₁-C₁₈-Alkylacrylates
c₅) 0 bis 5 Gew.-% mindestens eines weiteren Monomeren,
D) anschließende Emulsionspolymerisation in Gegenwart des nach Stufe C) erhaltenen Emulsionspolymerisates von 20 bis 35 Gew.-% eines Monomerengemisches aus
d₁) 35 bis 80 Gew.-% mindestens eines vinylaromatischen Monomeren
d₂) 20 bis 65 Gew.-% mindestens eines C₁-C₁₈-Alkylmethacrylates
d₃) 0 bis 15 Gew.-% mindestens eines C₁-C₁₈-Alkylacrylates
d₄) 0 bis 10 Gew.-% mindestens eines zwei- oder mehrfach ethylenisch ungesättigten Monomeren mit mindestens einer nicht konjugierten Doppelbindung
d₅) 0 bis 5 Gew.-% mindestens eines weiteren Monomeren
und
E) anschließende Emulsionspolymerisation in Gegenwart des nach Stufe D) erhaltenen Emulsionspolymerisates von 0 bis 7 Gew.-% eines Monomerengemisches aus
e₁) 90 bis 100 Gew.-% mindestens eines C₁-C₁₈-Alkylmethacrylates
e₂) 0 bis 10 Gew.-% mindestens eines C₁-C₁₈-Alkylacrylates und
e₃) 0 bis 5 Gew.-% mindestens eines zwei- oder mehrfach ethylenisch ungesättigten Monomeren mit mindestens einer nicht konjugierten Doppelbindung
wobei sich die Gewichtsprozente der in den Stufen A) bis E) eingesetzten Monomerengemische auf das Pfropfcopolymerisat beziehen und sich auf 100 Gew.-% addieren.

2. Thermoplastische Formmassen, enthaltend 2 bis 40 Gew.-% eines Pfropfcopolymerisats gemäß Anspruch 1.

3. Thermoplastische Formmassen, enthaltend
60 bis 98 Gew.-% Polyvinylhalogenid oder eines Vinylchloridcopolymeren mit mindestens 80 Gew.-% Vinylchlorideinheiten oder chloriertes Polyvinylchlorid und
2 bis 40 Gew.-% eines Pfropfcopolymerisats gemäß Anspruch 1.

4. Formteile, hergestellt aus thermoplastischen Formmassen gemäß Anspruch 2 oder 3.

## Claims (Claims for the following Contracting State(s): BE, CH, DE, FR, GB, IT, LI, NL)

1. A graft copolymer obtainable by
A) emulsion polymerization of from 2 to 20 % by weight of a monomer mixture comprising
a₁) from 40 to 100 % by weight of at least one conjugated diene,
a₂) from 0 to 60 % by weight of at least one vinylaromatic monomer,
a₃) from 0 to 10 % by weight of at least one diethylenically or polyethylenically unsaturated monomer having at least one nonconjugated double bond and
a₄) from 0 to 5 % by weight of at least one further monomer,
B) subsequent emulsion polymerization, in the presence of the emulsion polymer obtained in Stage A), of from 4 to 15 % by weight of a monomer mixture comprising
b₁) from 40 to 80 % by weight of at least one vinylaromatic monomer,
b₂) from 20 to 60 % by weight of a C₁-C₁₈-alkyl methacrylate
b₃) from 0 to 25 % by weight of at least one C₁-C₁₈-alkyl acrylate,
b₄) from 0 to 10 % by weight of at least one diethylenically or polyethylenically unsaturated monomer having at least one nonconjugated double bond and
b₅) from 0 to 5 % by weight of at least one further monomer,
C) subsequent emulsion polymerization, in the presence of the emulsion polymer obtained in Stage B), of from 5 to 45 % by weight of a monomer mixture comprising
c₁) from 60 to 100 % by weight of at least one conjugated diene,
c₂) from 0 to 40 % by weight of at least one vinylaromatic monomer,
c₃) from 0 to 10 % by weight of at least one diethylenically or polyethylenically unsaturated monomer having at least one nonconjugated double bond,
c₄) from 0 to 15 % by weight of at least one C₁-C₁₈-alkyl acrylate and
c₅) from 0 to 5 % by weight of at least one further monomer,
D) subsequent emulsion polymerisation, in the presence of the emulsion polymer obtained in Stage C), of from 20 to 35 % by weight of a monomer mixture comprising
d₁) from 35 to 80 % by weight of at least one vinylaromatic monomer,
d₂) from 20 to 65 % by weight of at least one C₁-C₁₈ alkyl methacrylate,
d₃) from 0 to 15 % by weight of at least one C₁-C₁₈-alkyl acrylate,
d₄) from 0 to 10 % by weight of at least one diethylenically or polyethylenically unsaturated monomer having at least one nonconjugated double bond and
d₅) from 0 to 5 % by weight of at least one further monomer
and
E) subsequent emulsion polymerization, in the presence of the emulsion polymer obtained in Stage D), of from 0 to 7 % by weight of a monomer mixture comprising
e₁) from 90 to 100 % by weight of at least one C₁-C₁₈-alkyl methacrylate,
e₂) from 0 to 10 % by weight of at least one C₁-C₁₈-alkyl acrylate and
e₃) from 0 to 5 % by weight of at least one diethylenically or polyethylenically unsaturated monomer having at least one nonconjugated double bond,
the percentages by weight of the monomer mixture used in Stages A) to E) being based on the graft copolymer and summing to 100 % by weight.

2. A process for the preparation of a graft copolymer as claimed in claim 1, which is carried out according to the measures stated there.

3. A thermoplastic molding material containing from 2 to 40 % by weight of a graft copolymer as claimed in claim 1.

4. A thermoplastic molding material containing from 60 to 98 % by weight of polyvinyl halide or of a vinyl chloride copolymer having at least 80 % by weight of vinyl chloride units or postchlorinated polyvinyl chloride and
from 2 to 40 % by weight of a graft copolymer as claimed in claim 1.

5. A molding produced from a thermoplastic molding material as claimed in claim 3 or 4.

## Claims (Claims for the following Contracting State(s): ES)

1. A process for the preparation of a graft copolymer, which comprises carrying out the following steps:
A) Emulsion polymerization of from 2 to 20 % by weight of a monomer mixture comprising
a₁) from 40 to 100 % by weight of at least one conjugated diene,
a₂) from 0 to 60 % by weight of at least one vinylaromatic monomer,
a₃) from 0 to 10 % by weight of at least one diethylenically or polyethylenically unsaturated monomer having at least one nonconjugated double bond and
a₄) from 0 to 5 % by weight of at least one further monomer,
B) subsequent emulsion polymerization, in the presence of the emulsion polymer obtained in Stage A), of from 4 to 15 % by weight of a monomer mixture comprising
b₁) from 40 to 80 % by weight of at least one vinylaromatic monomer,
b₂) from 20 to 60 % by weight of a C₁-C₁₈-alkyl methacrylate
b₃) from 0 to 25 % by weight of at least one C₁-C₁₈-alkyl acrylate,
b₄) from 0 to 10 % by weight of at least one diethylenically or polyethylenically unsaturated monomer having at least one nonconjugated double bond and
b₅) from 0 to 5 % by weight of at least one further monomer,
C) subsequent emulsion polymerization, in the presence of the emulsion polymer obtained in Stage B), of from 5 to 45 % by weight of a monomer mixture comprising
c₁) from 60 to 100 % by weight of at least one conjugated diene,
c₂) from 0 to 40 % by weight of at least one vinylaromatic monomer,
c₃) from 0 to 10 % by weight of at least one (5) ein96 by weight of at least one diethylenically or polyethylenically unsaturated monomer having at least one nonconjugated double bond,
c₄) from 0 to 15 % by weight of at least one C₁-C₁₈-alkyl acrylate and
c₅) from 0 to 5 % by weight of at least one further monomer,
D) subsequent emulsion polymerization, in the presence of the emulsion polymer obtained in Stage C), of from 20 to 35 % by weight of a monomer mixture comprising
d₁) from 35 to 80 % by weight of at least one vinylaromatic monomer,
d₂) from 20 to 65 % by weight of at least one C₁-C₁₈ alkyl methacrylate,
d₃) from 0 to 15 % by weight of at least one C₁-C₁₈-alkyl acrylate,
d₄) from 0 to 10 % by weight of at least one diethylenically or polyethylenically unsaturated monomer having at least one nonconjugated double bond and
d₅) from 0 to 5 % by weight of at least one further monomer
and
E) subsequent emulsion polymerization, in the presence of the emulsion polymer obtained in Stage D), of from 0 to 7 % by weight of a monomer mixture comprising
e₁) from 90 to 100 % by weight of at least one C₁-C₁₈-alkyl methacrylate,
e₂) from 0 to 10 % by weight of at least one C₁-C₁₈-alkyl acrylate and
e₃) from 0 to 5 % by weight of at least one diethylenically or polyethylenically unsaturated monomer having at least one nonconjugated double bond,
the percentages by weight of the monomer mixture used in Stages A) to E) being based on the graft copolymer and summing to 100 % by weight.

2. A thermoplastic molding material containing from 2 to 40 % by weight of a graft copolymer as claimed in claim 1.

3. A thermoplastic molding material containing from 60 to 98 % by weight of polyvinyl halide or of a vinyl chloride copolymer having at least 80 % by weight of vinyl chloride units or postchlorinated polyvinyl chloride and
from 2 to 40 % by weight of a graft copolymer as claimed in claim 1.

4. A molding produced from a thermoplastic molding material as claimed in claim 2 or 3.

## Revendications (Revendications pour l'(les) Etat(s) contractant(s) suivant(s): BE, CH, DE, FR, GB, IT, LI, NL)

1. Copolymères greffés, pouvant être obtenus par
A) polymérisation en émulsion de 2 à 20% en poids d'un mélange de monomères composé de
a₁) 40 à 100% en poids d'au moins un diène conjugué,
a₂) 0 à 60% en poids d'au moins un monomère vinylaromatique,
a₃) 0 a 10% en poids d'au moins un monomère à deux ou plusieurs insaturations éthyléniques, comportant au moins une double liaison non conjuguée,
a₄) 0 à 5% en poids d'au moins un autre monomère,
B) polymérisation en émulsion subséquente, en présence du produit de polymérisation en émulsion obtenu dans l'étape A), de 4 à 15% en poids d'un mélange de monomères composé de
b₁) 40 à 80% en poids d'au moins un monomère vinylaromatique,
b₂) 20 à 60% en poids d'un méthacrylate d'alkyle en C₁-C₁₈,
b₃) 0 à 25% en poids d'au moins un acrylate d'alkyle en C₁-C₁₈,
b₄) 0 à 10% en poids d'au moins un monomère à deux ou plusieurs insaturations éthyléniques, comportant au moins une double liaison non conjuguée,
b₅) 0 à 5% en poids d'au moins un autre monomère,
C) polymérisation en émulsion subséquente, en présence du produit de polymérisation en émulsion obtenu dans l'étape B), de 5 à 45% en poids d'un mélange de monomères composé de
c₁) 60 à 100% en poids d'au moins un diène conjugué,
c₂) 0 à 40% en poids d'au moins un monomère vinylaromatique,
c₃) 0 à 10% en poids d'au moins un monomère à deux ou plusieurs insaturations éthyléniques, comportant au moins une double liaison non conjuguée,
c₄) 0 à 15% en poids d'au moins un acrylate d'alkyle en c₁-c₁₈,
c₅) 0 à 5% en poids d'au moins un autre monomère,
D) polymérisation en émulsion subséquente, en présence du produit de polymérisation en émulsion obtenu dans l'étape C), de 20 à 35% en poids d'un mélange de monomères composé de
d₁) 35 à 80% en poids d'au moins un monomère vinylaromatique.
d₂) 20 à 65% en poids d'au moins un méthacrylate d'alkyle en c₁-c₁₈,
d₃) 0 à 15% en poids d'au moins un acrylate d'alkyle en c₁-c₁₈,
d₄) 0 à 10% en poids d'au moins un monomère à deux ou plusieurs insaturations éthyléniques, comportant au moins une double liaison non conjuguée,
d₅) 0 à 5% en poids d'au moins un autre monomère,
et
E) polymérisation en émulsion subséquente, en présence du produit de polymérisation en émulsion obtenu dans l'étape D), de 0 à 7% en poids d'un mélange de monomères composé de
e₁) 90 à 100% en poids d'au moins un méthacrylate d'alkyle en C₁-C₁₈,
e₂) 0 à 10% en poids d'au moins un acrylate d'alkyle en c₁-c₁₈, et
e₃) 0 à 5% en poids d'au moins un monomère à deux ou plusieurs insaturations éthyléniques, comportant au moins une double liaison non conjuguée,
les pourcentages en poids des mélanges de monomères mis en réaction dans les étapes A) à E) se rapportant au copolymère greffé et s'additionnant à 100% en poids.

2. Procédé de préparation de copolymères greffés selon la revendication 1, caractérisé en ce qu'on l'exécute en suivant les mesures indiquées dans cette revendication.

3. Masses à mouler thermoplastiques, contenant de 2 à 40% en poids d'un copolymère greffé selon la revendication 1.

4. Masses à mouler thermoplastiques, contenant
60 à 98% en poids de poly(halogénure de vinyle) ou d'un copolymère de chlorure de vinyle contenant au moins 80% en poids de motifs chlorure de vinyle ou de poly(chlorure de vinyle) chloré et
2 à 40% en poids d'un copolymère greffé selon la revendication 1.

5. Pièces moulées, fabriquées à partir de masses à mouler thermoplastiques selon la revendication 3 ou 4.

## Revendications (Revendications pour l'(les) Etat(s) contractant(s) suivant(s): ES)

1. Procédé de préparation de copolymères greffés, caractérisé en ce que l'on conduit les étapes suivantes:
A) polymérisation en émulsion de 2 à 20% en poids d'un mélange de monomères composé de
a₁) 40 à 100% en poids d'au moins un diène conjugué,
a₂) 0 à 60% en poids d'au moins un monomère vinylaromatique.
a₃) 0 à 10% en poids d'au moins un monomère à deux ou plusieurs insaturations éthyléniques, comportant au moins une double liaison non conjuguée,
a₄) 0 à 5% en poids d'au moins un autre monomère,
B) polymérisation en émulsion subséquente, en présence du produit de polymérisation en émulsion obtenu dans l'étape A), de 4 a 15% en poids d'un mélange de monomères composé de
b₁) 40 à 80% en poids d'au moins un monomère vinylaromatique,
b₂) 20 à 60% en poids d'un méthacrylate d'alkyle en c₁-c₁₈,
b₃) 0 à 25% en poids d'au moins un acrylate d'alkyle en c₁-c₁₈,
b₄) 0 à 10% en poids d'au moins un monomère à deux ou plusieurs insaturations éthyléniques, comportant au moins une double liaison non conjuguée,
b₅) 0 à 5% en poids d'au moins un autre monomère,
C) polymérisation en émulsion subséquente, en présence du produit de polymérisation en émulsion obtenu dans l'étape B), de 5 à 45% en poids d'un mélange de monomères composé de
c₁) 60 à 100% en poids d'au moins un diène conjugué,
c₂) 0 à 40% en poids d'au moins un monomère vinylaromatique,
c₃) 0 à 10% en poids d'au moins un monomère à deux ou plusieurs insaturations éthyléniques, comportant au moins une double liaison non conjuguée,
c₄) 0 à 15% en poids d'au moins un acrylate d'alkyle en c₁-c₁₈,
c₅) 0 à 5% en poids d'au moins un autre monomère,
D) polymérisation en émulsion subséquente, en présence du produit de polymérisation en émulsion obtenu dans l'étape C), de 20 à 35% en poids d'un mélange de monomères compose de
d₁) 35 à 80% en poids d'au moins un monomère vinylaromatique,
d₂) 20 à 65% en poids d'au moins un méthacrylate d'alkyle en c₁-c₁₈,
d₃) 0 à 15% en poids d'au moins un acrylate d'alkyle en c₁-c₁₈,
d₄) 0 à 10% en poids d'au moins un monomère à deux ou plusieurs insaturations éthyléniques, comportant au moins une double liaison non conjuguée,
d₅) 0 à 5% en poids d'au moins un autre monomère,
et
E) polymérisation en émulsion subséquente, en présence du produit de polymérisation en émulsion obtenu dans l'étape D), de 0 à 7% en poids d'un mélange de monomères composé de
e₁) 90 à 100% en poids d'au moins un méthacrylate d'alkyle en c₁-c₁₈,
e₂) 0 à 10% en poids d'au moins un acrylate d'alkyle en c₁-c₁₈, et
e₃) 0 à 5% en poids d'au moins un monomère à deux ou plusieurs insaturations éthyléniques, comportant au moins une double liaison non conjuguée,
les pourcentages en poids des mélanges de monomères mis en réaction dans les étapes A) à E) se rapportant au copolymère greffé et s'additionnant à 100% en poids.

2. Masses à mouler thermoplastiques, contenant de 2 à 40% en poids d'un copolymère greffé selon la revendication 1.

3. Masses à mouler thermoplastiques, contenant
60 à 98% en poids de poly(halogénure de vinyle) ou d'un copolymère de chlorure de vinyle contenant au moins 80% en poids de motifs chlorure de vinyle ou de poly(chlorure de vinyle) chloré et
2 à 40% en poids d'un copolymère greffé selon la revendication 1.

4. Pièces moulées, fabriquées à partir de masses à mouler thermoplastiques selon la revendication 2 ou 3.
